# FASCICULE DE BREVET EUROPEEN

(11) **EP 1 999 019 B1**
(45) Date de publication et mention de la délivrance du brevet: **12.05.2010**
(21) Numéro de dépôt: 07731172.8
(22) Date de dépôt: 22.03.2007
(51) Int. Cl.: B64D 15/04

(54) **TURBOMOTEUR COMPORTANT UN SYSTEME POUR LE DEGIVRAGE D'UN CAPOT D'ENTREE D'AIR**
TURBOMOTOR MIT EINEM SYSTEM ZUM ENTEISEN EINES LUFTEINLASSVERKLEIDUNGSTEILS
TURBO ENGINE COMPRISING A SYSTEM FOR DEICING AN AIR INLET COWL

(30) Priorité: 27.03.2006 FR 0602624
(43) Date de publication de la demande: 10.12.2008
(73) Titulaire: AIRBUS OPERATIONS (SAS), 31060 Toulouse (FR)
(72) Inventeur: PORTE, Alain, F-31770 Colomiers (FR)
(74) Mandataire: Bonnetat, Christian
(86) Numéro de dépôt international: PCT/FR2007/000483
(87) Numéro de publication internationale: WO 2007/110499

(56) Documents cités:
- EP-A1- 0 918 150
- GB-A- 2 220 719
- US-A- 3 396 992
- US-A1- 2003 217 778

## Description

La présente invention concerne le dégivrage des capots d'entrée d'air de turbomoteurs, notamment pour aéronefs.

On sait que, en cas de besoin (prévention contre la formation de givre ou élimination de givre déjà formé), le bord d'attaque du capot d'entrée d'air de tels turbomoteurs est dégivré par réchauffement par de l'air chaud sous pression, prélevé sur ledit turbomoteur et amené audit bord d'attaque par un circuit de circulation d'air chaud. Un tel circuit de circulation d'air chaud comporte, de façon connue, deux branches en équerre, à savoir une branche transversale reliée audit turbomoteur et une branche longitudinale, disposée latéralement par rapport audit turbomoteur et reliée à un injecteur en liaison avec ledit bord d'attaque, cf. EP 0 918 150.

Or, l'air chaud prélevé sur le turbomoteur est à une température élevée, par exemple de l'ordre de 500°C, et à une pression également élevée, par exemple de l'ordre de 10 à 20 bars. Il en résulte que les branches en équerre dudit circuit de circulation d'air chaud, réalisées en tubes d'acier, sont soumises à des variations de longueurs importantes sous l'action de la température, et éventuellement de la pression, dudit air chaud. De ce fait, l'équerre rigide formée par lesdites branches transversale et longitudinale tend à se déformer et les moyens de fixation dudit circuit de circulation d'air chaud audit capot d'entrée d'air et les moyens de prélèvement d'air chaud sous pression sur le turbomoteur subissent des contraintes élevées, pouvant les détériorer ou les détruire.

La présente invention a pour objet de remédier à cet inconvénient.

A cette fin, selon l'invention, le système pour le dégivrage du bord d'attaque creux d'un capot d'entrée d'air pour turbomoteur, notamment pour aéronef, ledit système de dégivrage comportant:
- un injecteur adapté pour injecter de l'air chaud sous pression à l'intérieur dudit bord d'attaque creux ;
- des moyens de prélèvement d'air chaud sous pression montés sur le générateur du flux chaud dudit turbomoteur ;
- un circuit de circulation d'air chaud pour véhiculer ledit air chaud sous pression depuis lesdits moyens de prélèvement jusqu'audit injecteur, ledit circuit de circulation d'air chaud comportant deux branches en équerre, à savoir :
   ■ une branche transversale, dont l'extrémité est raccordée rigidement auxdits moyens de prélèvement, et
   ■ une branche longitudinale, qui est disposée latéralement par rapport audit turbomoteur et dont l'extrémité est raccordée audit injecteur ; et
- des moyens de fixation, disposés du côté dudit injecteur, pour fixer ladite branche longitudinale audit capot d'entrée d'air, est remarquable en ce qu'un dispositif d'articulation étanche est monté sur au moins l'une desdites branches dudit circuit de circulation d'air chaud pour conférer à ladite équerre des possibilités de déformation autour dudit dispositif d'articulation.

Ainsi, grâce au(x)dit(s) dispositif(s) d'articulation étanche(s), l'équerre formée par lesdites branches transversale et longitudinale peut elle-même se déformer lors de variations de longueur desdites branches sous l'action de la température et/ou de la pression dudit air chaud, lesdites branches adaptant leur position relative à leurs longueurs réelles sans appliquer de contraintes excessives aux moyens de fixation dudit circuit de circulation d'air chaud.

Le ou les dispositifs d'articulation étanche(s) peut(peuvent) être de tout type connu, tel que manchon souple, soufflet, etc ... Toutefois, de préférence, chaque dispositif d'articulation étanche est du type à rotule.

Pour augmenter encore les possibilités de déformation dudit circuit de circulation d'air chaud autour de ladite ou desdites articulation(s), il est avantageux que chacune de celles-ci comporte deux rotules espacées l'une de l'autre le long de ladite branche correspondante du circuit d'air chaud.

Bien entendu, ledit circuit de circulation d'air chaud conforme à la présente invention peut être formé par une simple tuyauterie. Cependant, du fait de la température élevée de l'air chaud qui le traverse, ledit circuit rayonne de la chaleur qui peut endommager certaines structures dudit capot d'entrée d'air, voisines dudit circuit de circulation d'air chaud. De plus, pour des raisons de sécurité évidentes, il est avantageux de prévoir une protection desdites structures environnantes, dans le cas de fuites d'air chaud sous pression ou de rupture de ladite tuyauterie.

Aussi, selon une particularité importante de la présente invention permettant d'éviter ces derniers inconvénients, on prévoit une enveloppe de protection externe aussi bien sur la branche transversale que sur la branche longitudinale dudit circuit de circulation d'air chaud.

Ainsi, dans un mode de réalisation avantageux, chaque branche articulée dudit circuit de circulation d'air chaud comporte un élément interne de conduite d'air chaud pourvu dudit dispositif d'articulation étanche et un élément externe d'enveloppe de protection entourant ledit élément interne, ledit élément externe étant pourvu d'un dispositif d'articulation conjugué, disposé et réalisé en correspondance avec ledit dispositif d'articulation étanche dudit élément interne.

Dans ce dernier mode de réalisation, il est avantageux, à des fins de vérification et de maintenance du dispositif d'articulation étanche dudit élément interne, que ledit élément externe d'enveloppe de protection soit amovible. Pour ce faire, au moins l'un des dispositifs d'articulation de l'élément interne et de l'élément externe peut être du type à rotule déboîtable. A cette dernière fin, le dispositif d'articulation concerné peut comporter une rotule coopérant avec une surface cylindrique.

L'expérience a montré que, pour obtenir le résultat visé par la présente invention, il était suffisant, dans la plupart des cas, que seule ladite branche transversale dudit circuit de circulation d'air chaud soit articulée.

Dans un premier mode de réalisation préférée du système de dégivrage conforme à la présente invention :
- ladite branche longitudinale du circuit de circulation d'air chaud est constituée par un élément interne de conduite d'air chaud et par un élément externe d'enveloppe de protection entourant ledit élément interne ;
- l'un des deux éléments interne et externe constitutifs de ladite branche longitudinale est longitudinalement rigide, tandis que l'autre desdits éléments constitutifs comporte au moins deux parties emboîtées l'une dans l'autre et aptes à coulisser l'une par rapport à l'autre de façon étanche ;
- les deux éléments constitutifs de ladite branche longitudinale sont solidaires l'un de l'autre à leurs deux extrémités ;
- du côté dudit injecteur, les deux éléments constitutifs sont rigidement reliés en commun auxdits moyens de fixation ; et
- du côté de ladite branche transversale, d'une part, lesdits éléments internes de conduite d'air chaud desdites branches longitudinale et transversale sont solidaires l'un de l'autre et, d'autre part, lesdits éléments externes d'enveloppe de protection desdites branches longitudinale et transversale sont également solidaires l'un de l'autre.

Grâce à une telle disposition, celui desdits éléments de ladite branche longitudinale qui est rigide sert de tirant à l'autre de ces éléments constitué desdites parties emboîtées et coulissantes, de sorte que l'allongement de ladite branche longitudinale sous l'action de la pression de l'air chaud est en pratique limité à l'allongement dudit élément rigide sous l'action de la température dudit air chaud. On limite ainsi la déformation de l'équerre formée par lesdites branches transversale et longitudinale et donc l'amplitude de la rotation desdits dispositifs d'articulation de l'élément interne et de l'élément externe de ladite branche transversale.

Dans un second mode de réalisation préféré du système de -dégivrage conforme à la présente invention, mettant en oeuvre une telle particularité de limitation d'allongement :
- ladite branche longitudinale du circuit de circulation d'air chaud comporte au moins deux tronçons montés l'un au bout de l'autre ;
- chacun desdits tronçons est constitué par un élément interne de conduite d'air chaud et par un élément externe d'enveloppe de protection entourant ledit élément interne ;
- l'un des deux éléments constitutifs de chacun desdits tronçons est longitudinalement rigide, tandis que l'autre desdits éléments constitutifs comporte au moins deux parties emboîtées l'une dans l'autre et aptes à coulisser l'une par rapport à l'autre de façon étanche ;
- les deux éléments constitutifs de chacun desdits tronçons sont solidaires l'un de l'autre à leurs deux extrémités ;
- les deux tronçons de ladite branche longitudinale sont assemblés l'un à l'autre de façon à relier leurs éléments constitutifs, respectivement ;
- du côté dudit injecteur, les deux éléments constitutifs de l'un des deux tronçons sont rigidement reliés en commun auxdits moyens de fixation ; et
- du côté de ladite branche transversale, d'une part, lesdits éléments internes de conduite d'air chaud de l'autre desdits tronçons et de la branche transversale sont solidaires l'un de l'autre et, d'autre part, lesdits éléments externes d'enveloppe de protection dudit autre tronçon et de ladite branche transversale sont également solidaires l'un de l'autre.

Par ailleurs, il est avantageux que, du côté dudit injecteur, lesdits moyens de fixation comprennent une cloison d'obturation dudit bord d'attaque creux.

Les figures du dessin annexé feront bien comprendre comment l'invention peut être réalisée. Sur ces figures, des références identiques désignent des éléments semblables.

La figure 1 est une vue éclatée schématique d'un turbomoteur, sur laquelle sont représentés le capot d'entrée d'air et son système de dégivrage.

La figure 2 est une vue en coupe partielle agrandie dudit capot d'entrée d'air, selon la ligne II-II de la figure 1.

La figure 3 montre schématiquement un premier exemple de réalisation dudit système de dégivrage.

La figure 4 illustre schématiquement la déformation du système de dégivrage de la figure 3, lorsque ledit système est parcouru par de l'air chaud sous pression.

La figure 5 montre schématiquement en coupe un exemple de réalisation de l'articulation du système de dégivrage de la figure 3.

Les figures 6 et 7 montrent schématiquement, et respectivement, un deuxième et un troisième exemples de réalisation dudit système de dégivrage.

Les figures 8 et 9 montrent schématiquement en coupe deux exemples de réalisation de l'articulation pour les systèmes de dégivrage des figures 6 et 7.

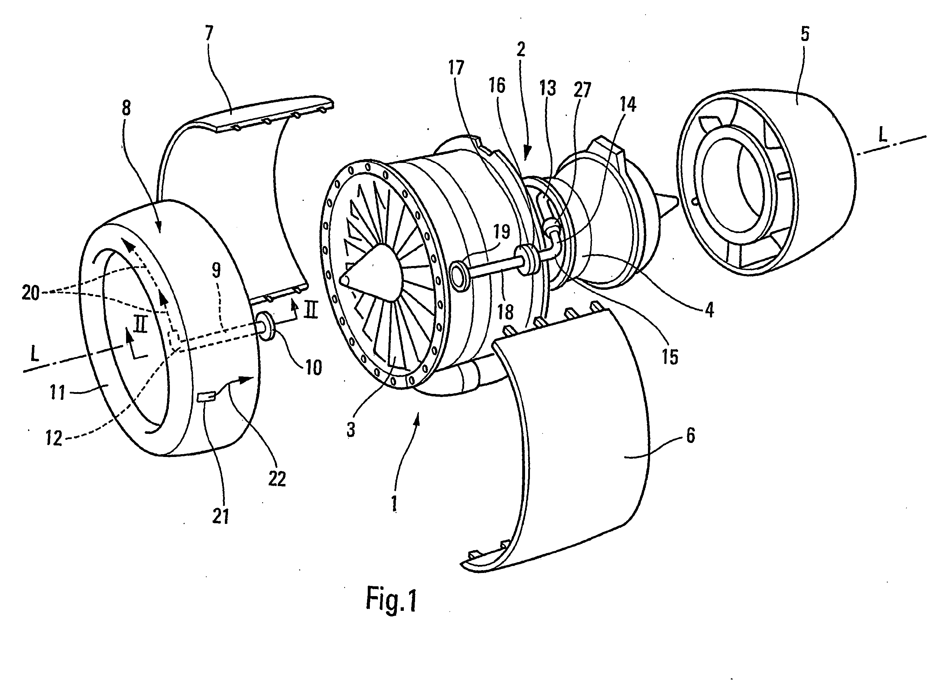

Le moteur à double flux 1 représenté schématiquement sur la figure 1 présente un axe longitudinal L-L et comporte, de façon connue, un générateur central d'air chaud 2, un ventilateur 3 et des étages de compresseurs 4. Au moteur 1 sont associés et fixés un ensemble de tuyère 5, deux capots latéraux 6 et 7 et un capot d'entrée d'air 8.

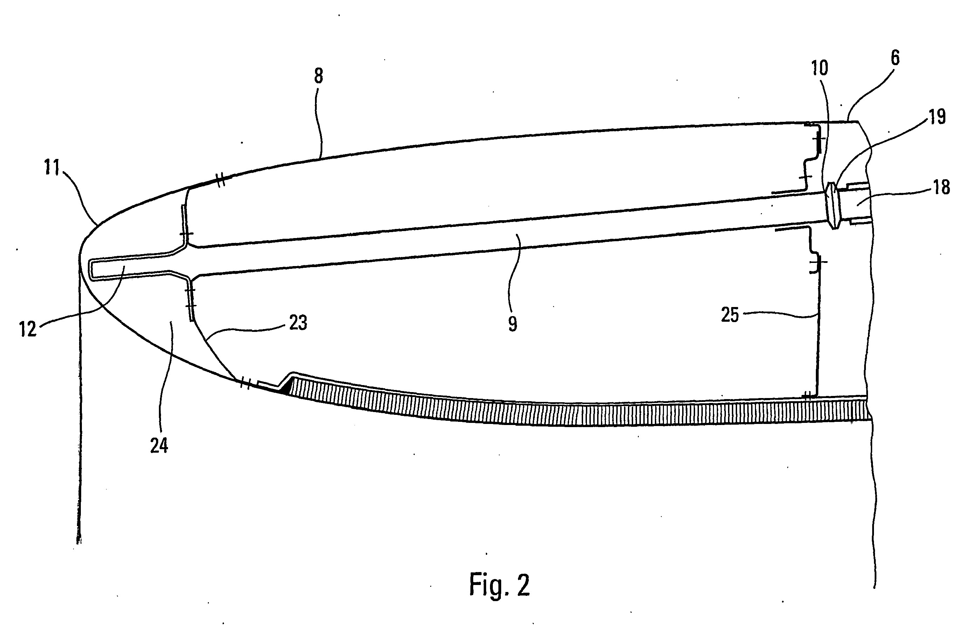

Comme cela est illustré schématiquement par les figures 1 et 2, le capot d'entrée d'air 8 comporte une conduite longitudinale latérale interne 9, pourvue à son extrémité arrière dirigée vers le moteur 1 d'un élément de raccord 10 et à son extrémité avant logée dans le bord d'attaque creux 11 dudit capot d'entrée d'air d'un injecteur 12. Par ailleurs, sur un étage de compresseurs 4 du moteur 1 est agencée une prise d'air chaud sous pression 13 qui est connectée à une conduite transversale interne 14, elle-même reliée par un coude 15 et par des éléments de raccord coopérants 16, 17 à une conduite longitudinale 18, logée entre le ventilateur 3 et le capot latéral 6. A l'opposé de l'élément de raccord 17, la conduite longitudinale 18 est pourvue, en regard de l'élément de raccord 10 de la conduite longitudinale 9, d'un élément de raccord complémentaire 19.

Ainsi, lorsque les éléments de raccord complémentaires 16 et 17, d'une part, et 10 et 19, d'autre part, sont reliés l'un à l'autre, les conduites 9, 14 et 18 constituent un circuit de circulation d'air chaud en équerre comportant une branche transversale 14 et une branche longitudinale 9, 18 et parcouru par de l'air chaud (par exemple à une température de 500°C) prélevé en 13 sur le moteur 1 est acheminé jusqu'à l'injecteur 12. Celui-ci peut donc souffler cet air chaud sous pression (flèches pointillées 20) à l'intérieur du bord d'attaque 11, pour le dégivrer. Au moins un orifice 21 est prévu dans la surface externe du capot 8 pour l'évacuation à l'air libre (flèches 22) de l'air chaud ayant circulé à l'intérieur du bord d'attaque 11 (alors par exemple à une température de 200°C).

Comme le montre en détail et à plus grande échelle la figure 2, le bord d'attaque creux 11 est fermé du côté arrière par une cloison annulaire interne 23, de sorte qu'une chambre périphérique annulaire 24 est formée à l'intérieur dudit bord d'attaque 11. L'injecteur 12 et l'extrémité correspondante de la conduite longitudinale 9 sont fixés à la cloison interne 23 et ledit injecteur, disposé dans ladite chambre annulaire 24, injecte dans celle-ci l'air chaud sous pression 20. L'orifice 21 met en communication ladite chambre annulaire 24 avec l'extérieur.

Du côté opposé au bord d'attaque 11, le capot d'entrée d'air 8 est obturé par une cloison annulaire interne 25, traversée librement en coulissement par l'extrémité de la conduite longitudinale 9 portant l'élément du raccord 10.

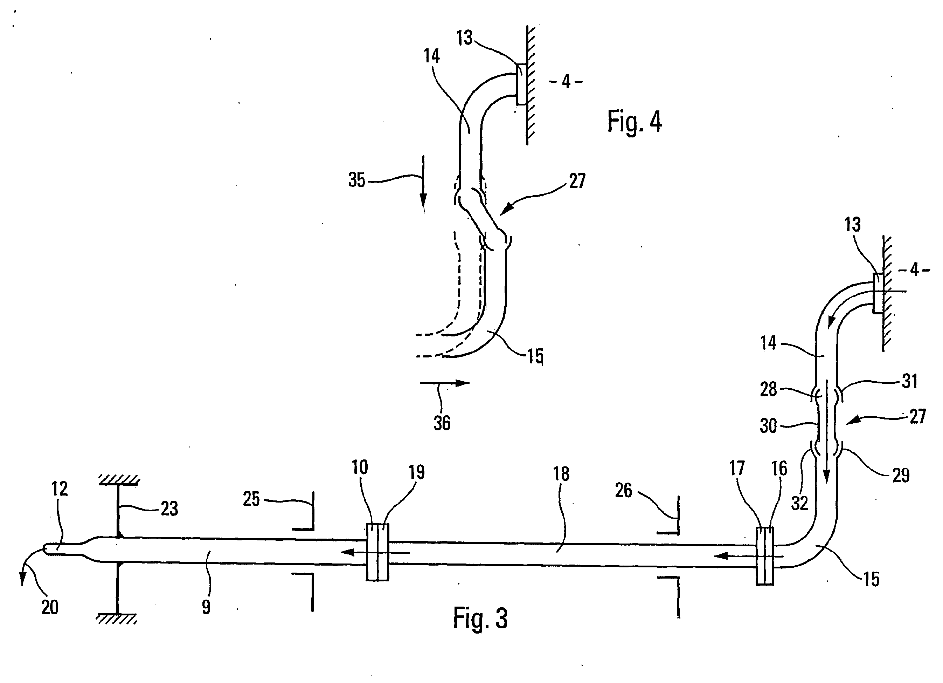

Comme cela est illustré schématiquement par la figure 3, le circuit de circulation d'air chaud en équerre 9, 14, 18 est donc fixé au moteur 1, à ses extrémités, par la prise d'air sous pression 13 et par la cloison 23 et supporté de façon coulissante par la cloison 25 et éventuellement d'autres moyens intermédiaires 26, par exemple des bielles articulées non autrement représentées.

Conformément à la présente invention, sur la branche transversale 14, est monté un dispositif d'articulation 27 comportant deux rotules 28, 29 espacées l'une de l'autre et montées respectivement aux extrémités d'un tronçon de conduite 30, interposé dans la conduite 14. Les rotules 28, 29 coopèrent respectivement avec des sièges sphériques 31, 32 solidaires de la conduite 14.

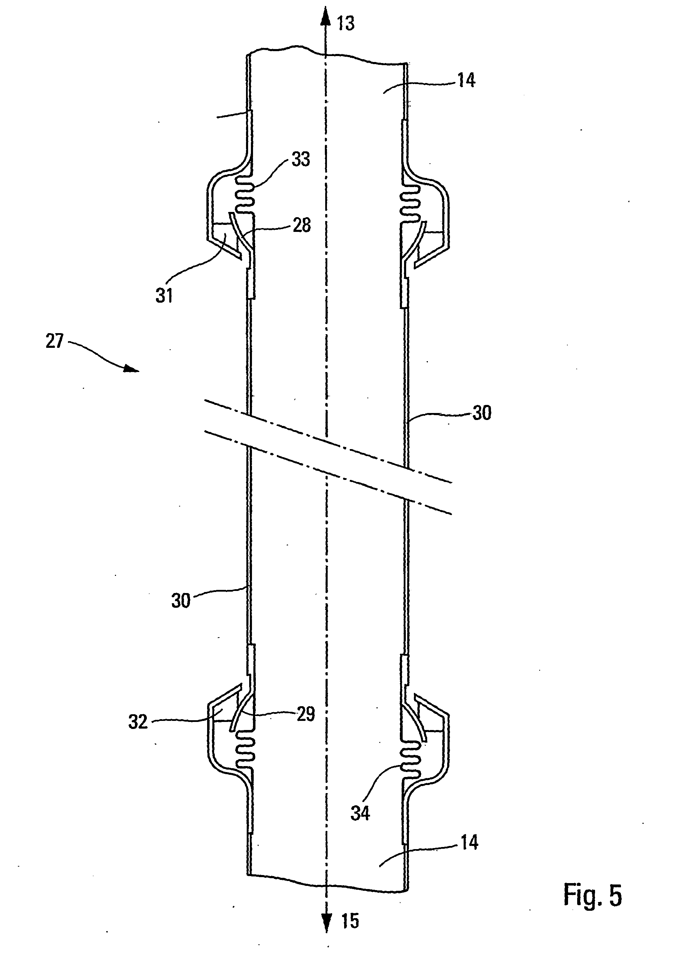

La figure 5 illustre un exemple de réalisation pratique du dispositif d'articulation 27. Dans cet exemple, on a prévu des soufflets d'étanchéité 33, 34, respectivement entre la rotule 28 et le siège 31 et entre la rotule 29 et le siège 32.

On comprendra aisément que, de façon équivalente à ce qui a été décrit ci-dessus,les rotules 28, 29 pourraient être solidaires de la conduite 14, alors que les sièges sphériques 31, 32. seraient solidaires du tronçon de conduite 30.

Comme cela est illustré schématiquement sur la figure 4, lorsque le circuit de circulation d'air chaud est parcouru par ce dernier, la branche transversale 14 subit un allongement transversal au turbomoteur 1 symbolisé par la flèche 35, alors que la branche longitudinale 9, 18 subit un allongement longitudinal symbolisé par la flèche 36. Grâce à la présence du dispositif d'articulation 27, l'équerre formée par lesdites branches 14 et 9, 18 se déforme alors, ce qui évite d'appliquer des contraintes excessives sur la prise de pression 13 et sur la cloison 23.

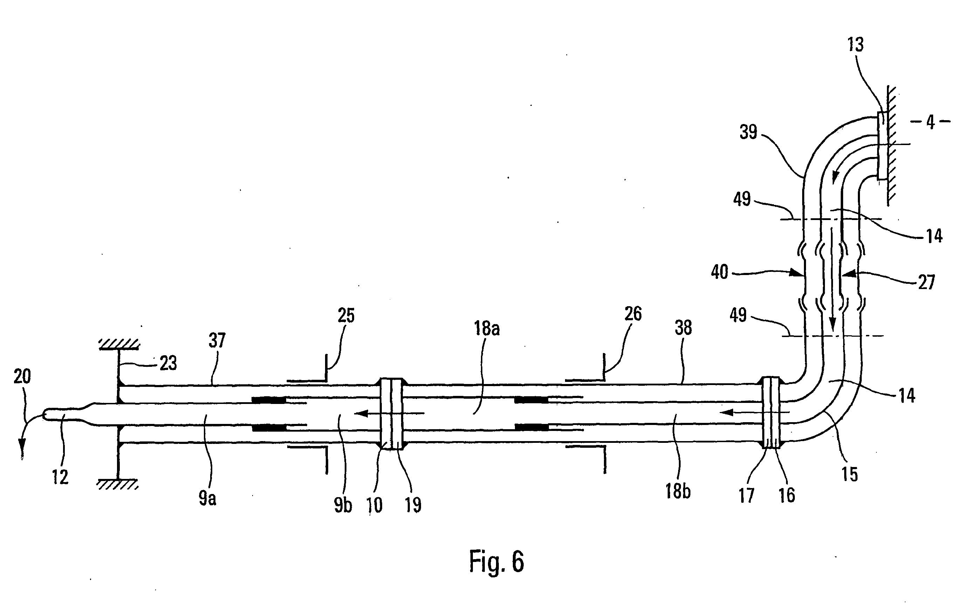

Dans le système de dégivrage montré schématiquement par la figure 6, on retrouve les éléments 4, 9, 10, 12 à 20, 23 et 25 à 27, décrits en regard de la figure 3.Toutefois, dans le système de la figure 6 :
- la conduite longitudinale 9 est composée de deux éléments 9a, 9b emboîtés de façon télescopique et étanche l'un dans l'autre, l'élément 9a étant solidaire de la cloison 23 et de l'injecteur 12, tandis que l'élément 9b est relié à l'élément de raccord 10 ;
- la conduite longitudinale 18 est composée de deux éléments 18a, 18b emboîtés de façon télescopique et étanche l'un dans l'autre, les éléments 18a et 18b étant respectivement reliés aux éléments de raccord 19 et 17 ;
- la conduite longitudinale 9a, 9b est entourée par une enveloppe de protection externe 37 longitudinalement rigide et solidaire, d'un côté, de la cloison 23 et, de l'autre côté, de l'élément de raccord 10 ;
- l'enveloppe de protection externe 37 traverse librement en coulissement la cloison 25 ;
- la conduite longitudinale 18a, 18b est entourée par une enveloppe de protection externe 38 longitudinalement rigide et solidaire, d'un côté, de l'élément de raccord 19 et, de l'autrer côté, de l'élément de raccord 17;
- l'enveloppe de protection externe 38 est libre en coulissement par rapport aux moyens de support intermédiaires 26 ; et
- la conduite transversale 14 est entourée par une enveloppe de protection externe 39 longitudinalement rigide et solidaire, d'un côté, de l'élément de raccord 16 et, de l'autre côté, de la prise d'air chaud sous pression 13, ladite enveloppe de protection externe 39 étant pourvu d'un dispositif d'articulation conjugué 40, disposé et réalisé en correspondance avec le dispositif d'articulation 27.

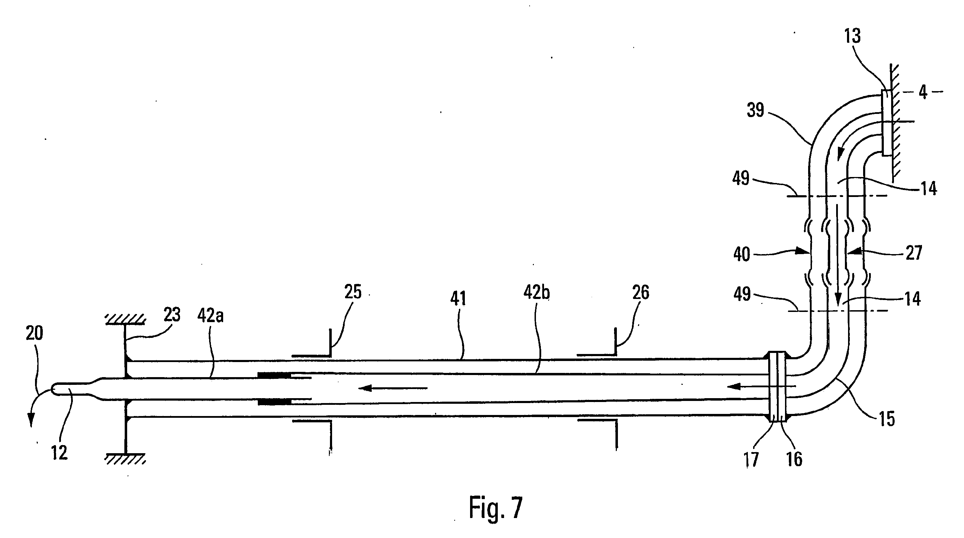

Dans la variante de réalisation de la figure 7, on retrouve l'enveloppe de protection externe 39 et le dispositif d'articulation 40. Les différences par rapport au système de la figure 6 résident en ce que :
- les éléments de raccord 10 et 19 ont été supprimés ;
- les enveloppes de protection externes 37 et 38 ont été remplacées par une unique enveloppe de protection externe 41, longitudinalement rigide et solidaire, d'un côté, de la cloison 23 et, de l'autre côté, de l'élément de raccord 17 ; et
- les éléments internes 9a, 9b et 18a, 18b des conduites longitudinales 9 et 18 ont été remplacés par un unique élément interne de conduite d'air chaud comportant deux parties 42a, 42b emboîtées l'une dans l'autre et aptes à coulisser l'une par rapport à l'autre de façon étanche, la partie 42a étant reliée à l'injecteur 12 et la partie 42b étant reliée à l'élément de raccord 17.

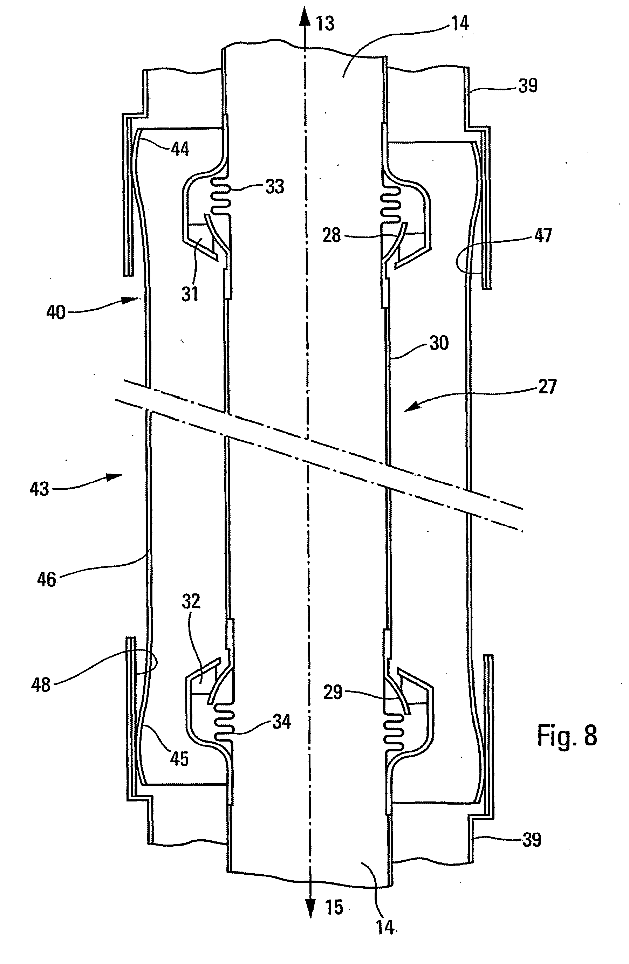

Sur la figure 8, on a représenté un exemple de système d'articulation combiné 43, comportant les dispositifs d'articulation 27 et 40 conjugués pour les systèmes de dégivrage des figures 6 et 7.

Dans le système d'articulation combiné 43, le dispositif d'articulation 27 est identique à celui décrit en regard de la figure 5. Quant au dispositif d'articulation 40, il comporte deux rotules 44, 45 espacées l'une de l'autre et montées respectivement aux extrémités d'un tronçon d'enveloppe de protection 46, interposé dans l'enveloppe de protection 39 et enveloppant le tronçon de conduite 30. Les rotules 44, 45 coopèrent respectivement avec des sièges cylindriquement ouverts 47, 48, solidaires de ladite enveloppe de protection 39.

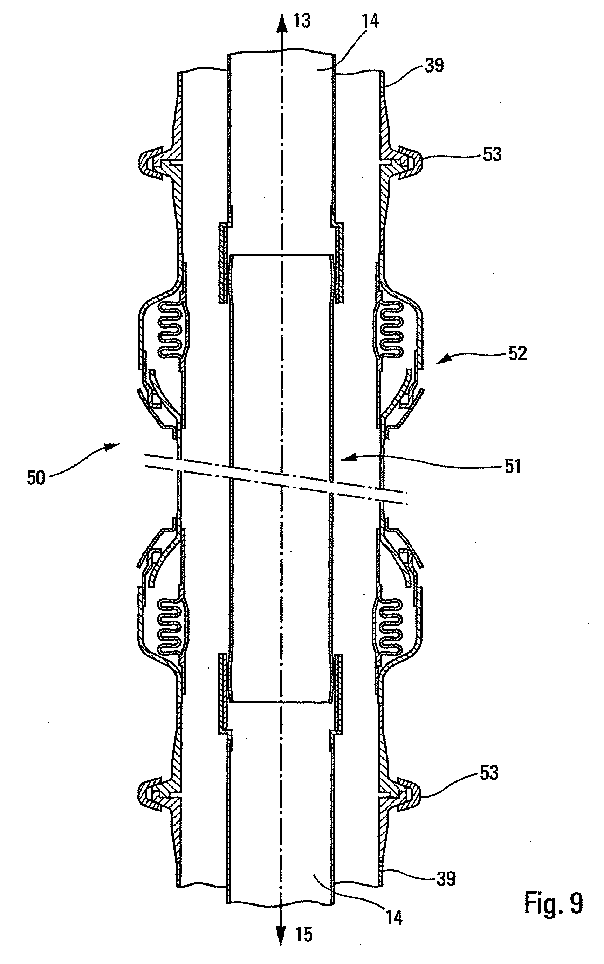

On comprendra aisément que, en prévoyant sur l'enveloppe de protection interne 39 des moyens de raccord 49 (par exemple du type de ceux portant la référence 53 sur la figure 9) en amont et/ou en aval des dispositifs d'articulation 27 et 40, il est possible de déboîter l'ensemble 44, 45, 46 des sièges cylindriques 47, 48 et donc d'accéder au dispositif d'articulation 27, par exemple pour une opération de maintenance.

Sur la figure 9, on a représenté une variante 50 du système d'articulation conjugué 43 de la figure 8. Dans cette variante 50, un dispositif d'articulation 51, semblable au dispositif d'articulation 40, est interposé dans la conduite 14 alors qu'un dispositif d'articulation 52, semblable au dispositif d'articulation 27, est interposé dans l'enveloppe de protection 39 par l'intermédiaire d'au moins un raccord rapide 53.

Dans la variante 50 du système d'articulation, le dispositif d'articulation 51 est à la fois aisément accessible et démontable.

## Revendications

1. Turbomoteur (1), notamment pour aéronef, pourvu d'un capot d'entrée d'air dont le bord d'attaque (11) est creux et relié à un système de dégivrage comportant :
- un injecteur (12) adapté pour injecter de l'air chaud sous pression à l'intérieur dudit bord d'attaque creux (11) ;
- des moyens (13) de prélèvement d'air chaud sous pression montés sur le générateur du flux chaud (2) dudit turbomoteur (1) ;
- un circuit (9, 14, 18) de circulation d'air chaud pour véhiculer ledit air chaud sous pression depuis lesdits moyens de prélèvement (13) jusqu'au dit injecteur (12), ledit circuit de circulation d'air chaud comportant deux branches en équerre, à savoir :
• une branche transversale (14), dont l'extrémité est raccordée rigidement auxdits moyens de prélèvement (13), et
• une branche longitudinale (9, 18) qui est disposée latéralement par rapport audit turbomoteur (1) et dont l'extrémité est raccordée audit injecteur (12) ; et
- des moyens de fixation (23), disposés du côté dudit injecteur (12), pour fixer ladite branche longitudinale (9, 18) audit capot d'entrée d'air (8),
**caractérisé en ce qu'**un dispositif d'articulation étanche (27) est monté sur au moins l'une desdites branches dudit circuit de circulation d'air chaud pour conférer à ladite équerre des possibilités de déformation autour dudit dispositif d'articulation.

2. Turbomoteur selon la revendication 1,
**caractérisé en ce que** ledit dispositif d'articulation étanche (27) est du type à rotule.

3. Turbomoteur selon la revendication 2,
**caractérisé en ce que** ledit dispositif d'articulation étanche (27) comporte deux rotules (28, 29) solidaires l'une de l'autre et espacées le long de ladite branche du circuit de circulation d'air chaud.

4. Turbomoteur selon l'une des revendications 1 à 3,
**caractérisé en ce que** chaque branche articulée dudit circuit de circulation d'air chaud comporte un élément interne (14) de conduite d'air chaud pourvu dudit dispositif d'articulation étanche (27) et un élément externe d'enveloppe de protection entourant ledit élément interne (14), ledit élément externe étant pourvu d'un dispositif d'articulation conjugué, disposé et réalisé en correspondance avec ledit dispositif d'articulation étanche (27) dudit élément interne (14).

5. Turbomoteur selon la revendication 4,
**caractérisé en ce que** ledit élément externe d'enveloppe de protection est amovible.

6. Turbomoteur selon la revendication 5,
**caractérisé en ce qu'**au moins l'un des dispositifs d'articulation (27) de l'élément interne (14) et de l'élément externe est du type à rotule déboîtable.

7. Turbomoteur selon la revendication 6,
**caractérisé en ce que**, dans chaque dispositif d'articulation à rotule déboîtable, ladite rotule coopère avec une surface cylindrique.

8. Turbomoteur selon l'une des revendications 1 à 7,
**caractérisé en ce que** seule ladite branche transversale dudit circuit de circulation d'air chaud est articulée.

9. Turbomoteur selon l'une quelconque des revendications 4 à 7 et la revendication 8,
**caractérisé en ce que**:
- ladite branche longitudinale du circuit de circulation d'air chaud est constituée par un élément interne de conduite d'air chaud et par un élément externe d'enveloppe de protection entourant ledit élément interne ;
- l'un des deux éléments constitutifs de ladite branche longitudinale est longitudinalement rigide, tandis que l'autre desdits éléments constitutifs comporte au moins deux parties emboîtées l'une dans l'autre et aptes à coulisser l'une par rapport à l'autre de façon étanche ;
- les deux éléments constitutifs de ladite branche longitudinale sont solidaires l'un de l'autre à leurs deux extrémités ;
- du côté dudit injecteur, les deux éléments constitutifs sont rigidement reliés en commun auxdits moyens de fixation ; et
- du côté de ladite branche transversale, d'une part, lesdits éléments internes de conduite d'air chaud desdites branches longitudinale et transversale sont solidaires l'un de l'autre et, d'autre part, lesdits éléments externes d'enveloppe de protection desdites branches longitudinale et transversale sont également solidaires l'un de l'autre.

10. Turbomoteur selon l'une quelconque des revendications 4 à 7 et la revendication 8,
**caractérisé en ce que** :
- ladite branche longitudinale du circuit de circulation d'air chaud comporte au moins deux tronçons montés l'un au bout de l'autre ;
- chacun desdits tronçons est constitué par un élément interne (9a, 9b ; 18a, 18b) de conduite d'air chaud et par un élément externe (37, 38) d'enveloppe de protection entourant ledit élément interne ;
- l'un des deux éléments constitutifs (37, 38) de chacun desdits tronçons est longitudinalement rigide, tandis que l'autre desdits éléments constitutifs comporte au moins deux parties (9a, 9b ;18a, 18b) emboîtées l'une dans l'autre et aptes à coulisser l'une par rapport à l'autre de façon étanche ;
- les deux éléments constitutifs de chacun desdits tronçons sont solidaires l'un de l'autre à leurs deux extrémités ;
- les deux tronçons de ladite branche longitudinale sont assemblés l'un à l'autre de façon à relier leurs éléments constitutifs, respectivement ;
- du côté dudit injecteur (12), les deux éléments constitutifs de l'un des deux tronçons sont rigidement reliés en commun auxdits moyens de fixation (23) ; et
- du côté de ladite branche transversale, d'une part, lesdits éléments internes de conduite d'air chaud de l'autre desdits tronçons et de la branche transversale sont solidaires l'un de l'autre et, d'autre part, lesdits éléments externes d'enveloppe de protection dudit autre tronçon et de ladite branche transversale sont également solidaires l'un de l'autre.

11. Turbomoteur selon l'une des revendications 1 à 10,
**caractérisé en ce que** lesdits moyens de fixation comprennent une cloison d'obturation (23) dudit bord d'attaque creux (11).

## Claims

1. Turbine engine (1), in particular for an aircraft, comprising an air inlet cowl, the leading edge (11) of which is hollow and is connected to a deicing system comprising:
- an injector (12) designed to inject pressurized hot air inside said hollow leading edge (11);
- means (13) for bleeding off pressurized hot air that are mounted on the hot-stream generator (2) of said turbine engine (1);
- a hot-air circulation circuit (9, 14, 18) for conveying said pressurized hot air from said bleed means (13) to said injector (12), said hot-air circulation circuit comprising two branches forming a right-angled structure, namely:
• a transverse branch (14) whose end is rigidly connected to said bleed means (13), and
• a longitudinal branch (9, 18) which is arranged laterally with respect to said turbine engine (1) and whose end is connected to said injector (12); and
- fastening means (23) arranged in the region of said injector (12) and intended to fasten said longitudinal branch (9, 18) to said air inlet cowl (8),
**characterized in that** a sealed articulation device (27) is mounted on at least one of said branches of said hot-air circulation circuit to provide said right-angled structure with capabilities of deforming about said articulation device.

2. The turbine engine as claimed in claim 1, **characterized in that** said sealed articulation device (27) is of the swivel joint type.

3. The turbine engine as claimed in claim 2, **characterized in that** said sealed articulation device (27) comprises two mutually secured swivels (28, 29) spaced apart along said branch of the hot-air circulation circuit.

4. The turbine engine as claimed in one of claims 1 to 3, **characterized in that** each articulated branch of said hot-air circulation circuit comprises an internal hot-air-ducting element (14), provided with said sealed articulation device (27), and an external protective casing element surrounding said internal element (14), said external element being provided with a conjoint articulation device arranged and produced in correspondence with said sealed articulation device (27) of said internal element (14).

5. The turbine engine as claimed in claim 4, **characterized in that** said external protective casing element is removable.

6. The turbine engine as claimed in claim 5, **characterized in that** at least one of the articulation devices (27) of the internal element (14) and of the external element is of the detachable swivel joint type.

7. The turbine engine as claimed in claim 6, **characterized in that**, in each detachable swivel-joint articulation device, said swivel cooperates with a cylindrical surface.

8. The turbine engine as claimed in one of claims 1 to 7, **characterized in that** only said transverse branch of said hot-air circulation circuit is articulated.

9. The turbine engine as claimed in any one of claims 4 to 7 and claim 8, **characterized in that**:
- said longitudinal branch of the hot-air circulation circuit is constituted by an internal hot-air-ducting element and by an external protective casing element surrounding said internal element;
- one of the two constituent elements of said longitudinal branch is longitudinally rigid, whereas the other of said constituent elements comprises at least two parts which are nested one inside the other and which are capable of sliding with respect to one another in a sealed manner;
- the two constituent elements of said longitudinal branch are secured to one another at their two ends;
- in the region of said injector, the two constituent elements are rigidly connected in common to said fastening means; and
- in the region of said transverse branch, on the one hand, said internal hot-air-ducting elements of said longitudinal and transverse branches are secured to one another and, on the other hand, said external protective casing elements of said longitudinal and transverse branches are likewise secured to one another.

10. The turbine engine as claimed in any one of claims 4 to 7 and claim 8, **characterized in that**:
- said longitudinal branch of the hot-air circulation circuit comprises at least two sections mounted one at the end of the other;
- each of said sections is constituted by an internal hot-air-ducting element (9a, 9b; 18a, 18b) and by an external protective casing element (37, 38) surrounding said internal element;
- one of the constituent elements (37, 38) of each of said sections is longitudinally rigid, whereas the other of said constituent elements comprises at least two parts (9a, 9b; 18a, 18b) which are nested one inside the other and which are capable of sliding with respect to one another in a sealed manner;
- the two constituent elements of each of said sections are secured to one another at their two ends;
- the two sections of said longitudinal branch are joined together so as to connect their constituent elements, respectively;
- in the region of said injector (12), the two constituent elements of one of the two sections are rigidly connected in common to said fastening means (23); and
- in the region of said transverse branch, on the one hand, said internal hot-air-ducting elements of the other of said sections and of the transverse branch are secured to one another and, on the other hand, said external protective casing elements of said other section and of said transverse branch are likewise secured to one another.

11. The turbine engine as claimed in one of claims 1 to 10, **characterized in that** said fastening means comprise a partition (23) which closes off said hollow leading edge (11).

## Patentansprüche

1. Gasturbine (1), insbesondere für ein Luftfahrzeug, versehen mit einer Lufteinlasshaube, deren Eintrittskante (11) hohl ist und mit einem Enteisungssystem in Verbindung steht, aufweisend:
- eine Einlassvorrichtung (12), die dazu geeignet ist, heiße Druckluft ins Innere der hohlen Eintrittskante (11) zu leiten;
- Mittel (13) zur Entnahme heißer Druckluft, die am Erzeuger des heißen Stoffstroms (2) der Gasturbine (1) angebracht sind;
- ein Heißluft-Kreislaufsystem (9, 14, 18), mittels dessen die heiße Druckluft von den Entnahmemitteln (13) zur Einlassvorrichtung (12) befördert wird, wobei das Heißluft-Kreislaufsystem zwei im Winkel angeordnete Zweigleitungen aufweist, nämlich:
• eine quergerichtete Zweigleitung (14), deren Ende auf steife Weise an die Entnahmemittel (13) angeschlossen ist, und
• eine längsgerichtete Zweigleitung (9, 18), die seitlich der Gasturbine (1) angeordnet ist und deren Ende mit der Einlassvorrichtung (12) verbunden ist, und
- Befestigungsmittel (23), die seitens der Einlassvorrichtung (12) angeordnet sind, um die längsgerichtete Zweigleitung (9, 18) an der Lufteinlasshaube (8) zu befestigen,
**dadurch gekennzeichnet, dass** eine abgedichtete Gelenkvorrichtung (27) an mindestens einer der Zweigleitungen des Heißluft-Kreislaufsystems angebracht ist, um es dem Winkel zu ermöglichen, rundum die Gelenkvorrichtung Verformungen zu erfahren.

2. Gasturbine nach Anspruch 1,
**dadurch gekennzeichnet, dass** die abgedichtete Gelenkvorrichtung (27) vom Typ Kugelgelenk ist.

3. Gasturbine nach Anspruch 2,
**dadurch gekennzeichnet, dass** die abgedichtete Gelenkvorrichtung (27) zwei Kugelgelenke (28, 29) aufweist, die miteinander zusammenhängen und in einem gewissen Abstand entlang der Zweigleitung des Heißluft-Kreislaufsystems angeordnet sind.

4. Gasturbine nach einem der Ansprüche 1 bis 3, **dadurch gekennzeichnet, dass** jede gelenkig gelagerte Zweigleitung des Heißluft-Kreislaufsystems ein inneres Element (14) zur Leitung heißer Luft, welches mit der abgedichteten Gelenkvorrichtung (27) versehen ist, und ein äußeres Hüllelement, welches das innere Element (14) zum schützend umgibt, aufweist, wobei das äußere Element mit einer Gelenkvorrichtung versehen ist, die in Übereinstimmung mit der abgedichteten Gelenkvorrichtung (27) des inneren Elements (14) gekoppelt, angeordnet und hergestellt ist.

5. Gasturbine nach Anspruch 4,
**dadurch gekennzeichnet, dass** das schützende äußere Hüllelement abnehmbar ist.

6. Gasturbine nach Anspruch 5,
**dadurch gekennzeichnet, dass** mindestens eine der Gelenkvorrichtungen (27) des inneren Elements (14) und des äußeren Elements vom Typ auskuppelbares Kugelgelenk ist.

7. Gasturbine nach Anspruch 6,
**dadurch gekennzeichnet, dass** bei jeder der Gelenkvorrichtungen mit auskuppelbarem Kugelgelenk das Kugelgelenk mit einer zylindrischen Fläche zusammenwirkt.

8. Gasturbine nach einem der Ansprüche 1 bis 7,
**dadurch gekennzeichnet, dass** nur die quergerichtete Zweigleitung des Heißluft-Kreislaufsystems gelenkig gelagert ist.

9. Gasturbinenach einem beliebigen der Ansprüche 4 bis 7 und nach Anspruch 8,
**dadurch gekennzeichnet, dass**:
- die längsgerichtete Zweigleitung des Heißluft-Kreislaufsystems aus einem inneren Element zur Leitung heißer Luft und aus einem äußeren Hüllelement, welches das innere Element zum Schützen umgibt, besteht;
- eines der beiden Teilelemente, aus denen die längsgerichtete Zweigleitung besteht, in Längsrichtung steif ist, während das andere dieser Teilelemente mindestens zwei Abschnitte aufweist, die ineinander gesteckt und dazu geeignet sind, unter Gewährleistung der Dichtigkeit gegeneinander eine Gleitbewegung auszuführen;
- die beiden Teilelemente, aus denen die längsgerichtete Zweigleitung besteht, an ihren beiden Enden miteinander zusammenhängen;
- die beidenTeilelemente,seitensder Einlassvorrichtung, auf steife Weise gemeinsam mit den Befestigungsmitteln verbunden sind; und
- seitens der quergerichteten Zweigleitung, zum einen, die inneren Elemente zur Leitung heißer Luft der längsgerichteten und der quergerichteten Zweigleitungen miteinander zusammenhängen und, zum anderen, die schützenden Hüllelemente der längsgerichteten und der quergerichteten Zeigleitungen ebenfalls miteinander zusammenhängen.

10. Gasturbine nach einem beliebigen der Ansprüche 4 bis 7 und nach Anspruch 8, **dadurch gekennzeichnet, dass**:
- die längsgerichtete Zweigleitung Heißluft-Kreislaufsystems mindestens zwei Teilstücke aufweist, die jeweils am Ende des anderen angebracht sind;
- jedes der Teilstücke aus einem inneren Element (9a, 9b; 18a, 18b) zur Leitung heißer Luft und aus einem äußeren Hüllelement (37, 38), welches das innere Element zum schützend umgibt, besteht;
- eines der beiden Teilelemente (37, 38), aus denen jedes der Teilstücke besteht, in Längsrichtung steif ist, während das andere dieser Teilelemente mindestens zwei Abschnitte (9a, 9b; 18a, 18b) aufweist, die ineinander gesteckt und dazu geeignet sind, unter Gewährleistung der Dichtigkeit gegeneinander eine Gleitbewegung auszuführen;
- die beiden Elemente, aus denen jedes der Teilstücke besteht, an ihren beiden Enden miteinander zusammenhängen;
- die beiden Teilstücke der längsgerichteten Zweigleitung derart zusammengefügt sind, dass ihre beiden Teilelemente jeweils miteinander verbunden sind;
- die beiden Teilelemente, aus denen das eine der Teilstücke besteht, seitens der Einlassvorrichtung (12) auf steife Weise gemeinsam mit den Befestigungsmitteln (23) verbunden sind; und
- seitens der quergerichteten Zweigleitung, zum einen, die inneren Elemente zur Leitung heißer Luft des anderen der Teilstücke und der quergerichteten Zweigleitung miteinander zusammenhängen und, zum anderen, die schützenden Hüllelemente des anderen Teilstücks und der quergerichteten Zweigleitung ebenfalls miteinander zusammenhängen.

11. Gasturbine nach einem der Ansprüche 1 bis 10, **dadurch gekennzeichnet, dass** die Befestigungsmittel eine Trennwand (23) zur Abdichtung der hohlen Eintrittskante (11) umfassen.
